# EUROPEAN PATENT APPLICATION

(11) **EP 2 650 323 A1**
(43) Date of publication of application: **16.10.2013**
(21) Application number: 11846159.9
(22) Date of filing: 05.12.2011
(51) Int. Cl.: C08J 9/26, B01D 69/10, B01D 71/46, C08G 59/20

(54) **METHOD FOR PRODUCING POROUS EPOXY RESIN SHEET**

(30) Priority: 06.12.2010 JP 2010271625
(71) Applicant: Nitto Denko Corporation, Ibaraki-shi, Osaka 567-8680 (JP)
(72) Inventor: HARADA,Noriaki, Ibaraki-shi Osaka 567-8680 (JP); KAWAGUCHI,Yoshihide, Ibaraki-shi Osaka 567-8680 (JP); HIRO,Atsushi, Ibaraki-shi Osaka 567-8680 (JP); MIZUIKE,Atsuko, Ibaraki-shi Osaka 567-8680 (JP); HAYASHI,Osamu, Ibaraki-shi Osaka 567-8680 (JP); ISHII,Katsumi, Ibaraki-shi Osaka 567-8680 (JP); HARADA,Chiaki, Ibaraki-shi Osaka 567-8680 (JP)
(74) Representative: Boult Wade Tennant
(86) International application number: PCT/JP2011/078073
(87) International publication number: WO 2012/077636

(57) **Abstract**

Provided is a porous epoxy resin sheet produced by cutting a cured epoxy resin body to a predetermined thickness, the porous epoxy resin sheet having a large surface area and a uniform in-plane pore size distribution. A method for producing a porous epoxy resin sheet, comprising forming a cylindrical or columnar cured resin body from a resin mixture containing an epoxy resin, a curing agent, and a porogen, cutting the surface of the cured resin body at a predetermined thickness to make an epoxy resin sheet, and then removing the porogen from the sheet to render the sheet porous, wherein when the cured resin body is formed from the resin mixture, curing is performed in a state where the viscosity of the mixture is at least 1,000 mPa·s.

## Description

### TECHNICAL FIELD

The present invention relates to a method for producing a porous epoxy resin sheet. Further, the present invention relates to a porous epoxy resin sheet obtained by the method, a composite separation membrane using the porous epoxy resin sheet, and a composite separation membrane element. The porous epoxy resin sheet is preferably used as an ultrafiltration membrane (UF membrane) and a microfiltration membrane (MF membrane) or a support for a composite separation membrane. This composite separation membrane, mainly as a reverse osmosis membrane (RO membrane) or a nanofiltration membrane (NF membrane), is used preferably for membrane separation processes such as the production of ultrapure water, desalination of brackish water or seawater, wastewater treatment, etc. Further the porous epoxy resin sheet can be used for advanced treatments, such as for separating or removing or collecting harmful components from dyeing drainage, electrodeposition paint drainage or sewage, or for concentration of active components in foodstuffs usage.

### BACKGROUND ART

Currently, a porous epoxy resin sheet according to the present invention is provided by a method for producing a porous resin sheet with use of a cutting method which comprises cutting a block of a cured body into a predetermined thickness. As an example of such a method, for example, a method for producing a modified polytetrafluoroethylene film by modifying a lumpy shape of a polytetrafluoroethylene powder, and cutting the modified lumpy molded article to form a long film has been proposed for the purpose of providing a method capable of producing a PTFE film (Patent Document 1).

In addition, a method of manufacturing a chip seal for scroll compressor, comprising the step of molding a resin composition comprising a fluorocarbon resin as a main component to a column shaped molding body or a cylindrical molding body, and molding the molded body into a sheet-shaped body by means of skiving work, has been proposed (Patent Document 2).

Further, a method for producing a porous burned polytetrafluoroethylene sheet by compressing and molding polytetrafluoroethylene powder to form a preliminary compressed molded body in a cylindrical shape, suspending the compressed molded body horizontally with a mandrel, burning the molded body to form a burned porous molded body, and then cutting the porous burned molded body has been proposed (Patent Document 3).

Moreover, the porous epoxy resin sheet according to the present invention can be used as a separation membrane of liquid and gas, or as a support for composite separation membranes. Conventionally, substrates on the surface of which a microporous layer having a separation function is substantially formed are exemplified for such a purpose, including, for example, cloth, nonwoven fabric, mesh net, and sintered foam sheet, which are made of materials such as polyester, polypropylene, polyethylene, and polyamide. Moreover, as the material for forming the microporous layer, for example, various kinds of polysulfones (e.g. polyether sulfone, polyarylether sulfone), polyimides, and vinylidene polyfluorides are exemplified. In particular, polysulfone is preferably used in view of chemical, mechanical, and thermal stabilities (Patent Document 4).

As the porous body of the epoxy resin, there has been disclosed a porous epoxy resin for use in purified medium, absorption and adsorption medium, and column packing materials (Patent Document 5).

### PRIOR ART DOCUMENTS

### PATENT DOCUMENTS

Patent document 1: JP-A-2004-338208
Patent document 2: JP-A-2000-240579
Patent document 3: JP-A-2001-341138
Patent document 4: JP-A-H2-187135
Patent document 5: WO 2006/073173

### SUMMARY OF THE INVENTION

### PROBLEMS TO BE SOLVED BY THE INVENTION

An object of the present invention is to provide a method for producing a porous epoxy resin sheet having a uniform in-plane pore size distribution and a large surface area, the porous epoxy resin sheet being used as a separation membrane for liquid and gas, or as a support for composite separation membranes.

### SOLUTIONS TO THE PROBLEMS

The present invention relates to a method for producing a porous epoxy resin sheet by forming a cylindrical or columnar cured resin body from a resin mixture containing an epoxy resin, a curing agent, and a porogen, cutting the surface of the cured resin body at a predetermined thickness to make an epoxy resin sheet, and then removing the porogen from the sheet to render the sheet porous, characterized in that when the cured resin body is formed from the resin mixture, curing is performed in a state where the viscosity of the mixture is at least 1,000 mPa·s. The temperature when the cured resin body is formed from the resin mixture is preferably 15°C or more, and further the viscosity just before the start of curing the resin mixture is preferably 5000 mPa·s or less.

Furthermore, in the present invention, an effect is easily obtained when using 1 liter or more of the capacity of the resin mixture and the cured resin body, and the cutting thickness of the epoxy resin sheet is preferably 20 µm to 1000 µm.

The epoxy resin used in the present invention is preferably a bisphenol A type epoxy resin, and further when using two or more kinds of epoxy resins having different epoxy equivalent weights are used as the epoxy resin, a total of products of the epoxy equivalent weight and the mixing ratio in the epoxy resin is 70,000 or more.

In addition, in the present invention, the resin mixture is preferably cured at 45°C or less and then further cured under heating at 70°C or more.

The present invention relates to a porous epoxy resin sheet obtained by the method described above, a composite separation membrane containing such porous epoxy resin sheet, and a composite separation membrane element using such composite separation membrane.

### BRIEF DESCRIPTION OF THE DRAWINGS

Fig. 1 is a schematic view illustrating the process of cutting a cylindrical cured resin body by using a slicer.
Fig. 2 is an SEM photograph at a magnification of 20,000 of the porous epoxy resin sheet in each part of the cylindrical cured body obtained in Example 1.
Fig. 3 is an SEM photograph at a magnification of 2,000 of the porous epoxy resin sheet in each part of the cylindrical cured body obtained in Comparative Example 1.
Fig. 4 is a perspective schematic view of the cylindrical cured body, showing confirmation parts of SEM photographs of Fig. 2 and Fig. 3.

### MODE FOR CARRYING OUT THE INVENTION

The present invention relates to a method for producing a porous epoxy resin sheet by forming a cylindrical or columnar cured resin body from a resin mixture containing an epoxy resin, a curing agent, and a porogen, cutting the surface of the cured resin body at a predetermined thickness to make an epoxy resin sheet, and then removing the porogen from the sheet to render the sheet porous, characterized in that when the cured resin body is formed from the resin mixture, curing is performed in a state where the viscosity of the mixture is at least 1,000 mPa·s.

The epoxy resin includes, for example, aromatic epoxy resins (e.g. bisphenol A type epoxy resin, brominated bisphenol A type epoxy resin, bisphenol F type epoxy resin, bisphenol AD type epoxy resin, stilbene type epoxy resin, biphenyl type epoxy resin, bisphenol A novolac type epoxy resin, cresol novolac type epoxy resin, diaminodiphenylmethane type epoxy resin, polyphenyl-based epoxy resins (e.g. tetrakis(hydroxyphenyl)ethane base), fluorene-containing epoxy resins, triglycidyl isocyanurates, heteroaromatic ring (e.g. triazine ring) -containing epoxy resin); and non-aromatic epoxy resins (e.g. aliphatic glycidyl ether type epoxy resin, aliphatic glycidyl ester type epoxy resin, alicyclic glycidyl ether type epoxy resin, alicyclic glycidyl ester type epoxy resin). These epoxy resins may be used alone or in combination of two or more thereof.

Of these, in order to form a uniform three-dimensional structure and uniform pores for a porous sheet as well as to secure chemical resistance and membrane strength, it is preferable to use at least one kind of aromatic epoxy resins selected from the group consisting of bisphenol A type epoxy resin, brominated bisphenol A type epoxy resin, bisphenol F type epoxy resin, bisphenol AD type epoxy resin, fluorene-containing epoxy resin and triglycidyl isocyanurate; at least one kind of alicyclic epoxy resins selected from the group consisting of alicyclic glycidyl ether type epoxy resin and alicyclic glycidyl ester type epoxy resin. Particularly, it is preferable to use at least one kind of aromatic epoxy resins each having an epoxy equivalent of 6000 or less and a melting point of 170°C or less, selected from the group consisting of bisphenol A type epoxy resin, brominated bisphenol A type epoxy resin, bisphenol AD type epoxy resin, fluorene-containing epoxy resin and triglycidyl isocyanurate; at least one kind of alicyclic epoxy resins each having an epoxy equivalent of 6000 or less and a melting point of 170°C or less, selected from the group consisting of alicyclic glycidyl ether type epoxy resin and alicyclic glycidyl ester type epoxy resin. Among them, a bisphenol A type epoxy resin can be used most conveniently in obtaining the desired properties.

In the epoxy resin, in order to obtain a porous resin sheet excellent in terms of chemical resistance and membrane strength, particularly bending performance, there is employed a method using two or more kinds of epoxy resins having different epoxy equivalent weights. In the present invention, as for the epoxy resin in this case, it has been found that a total of the epoxy resin on products of the epoxy equivalent weight and the mixing ratio (1 to 100 [%]) of the epoxy resin used greatly affects such properties described above, and this numerical value is preferably equal to and more than 70, 000, and is more preferably equal to and more than 90,000. If this numerical value is too low, enough membrane strength and bending performance are hardly obtained. This numerical value is preferably 200,000 or less and is more preferably 170,000 or less. If this numerical value is too large, it becomes difficult to obtain a uniform porous sheet because rendering of porosity is difficult.

The curing agent includes, for example, aromatic curing agents such as aromatic amines (e.g. metaphenylenediamine, diaminodiphenylmethane, diaminodiphenylsulfone, benzyldimethylamine, dimethylaminomethylbenzene), aromatic acid anhydrides (e.g. phthalic anhydride, trimellitic anhydride, pyromellitic anhydride), phenol resins, phenol novolac resins and heteroaromatic ring-containing amines (e.g. triazine ring-containing amine); and non-aromatic curing agents such as aliphatic amines (e.g. ethylenediamine, diethylenetriamine, triethylenetetramine, tetraethylenepentamine, iminobispropylamine, bis(hexamethylene)triamine, 1,3,6-trisaminomethylhexane, polymethylenediamine, trimethylhexamethylenediamine, polyether diamine), alicyclic amines (e.g. isophoronediamine, menthanediamine, N-aminoethylpiperazine, 3,9-bis(3-aminopropyl)2,4,8,10- tetraoxaspiro(5,5)undecane adduct, bis(4-amino-3- methylcyclohexyl)methane, bis(4-aminocyclohexyl)methane and modified product thereof), and aliphatic polyamideamines including polyamines and dimer acids. These curing agents may be used alone or in combination of two or more thereof.

Of these, in order to form a uniform three-dimensional structure and uniform pores as well as to secure membrane strength and elastic modulus, it is preferable to use at least one kind of aromatic amine curing agents each having two or more primary amines in the molecule, selected from the group consisting of metaphenylenediamine, diaminodiphenylmethane and diaminodiphenylsulfone; and at least one kind of alicyclic amine curing agents each having two or more primary amines in the molecule, selected from the group consisting of bis(4-amino-3-methylcyclohexyl)methane and bis(4-aminocyclohexyl)methane.

In addition, a preferable combination of the epoxy resin and the curing agent is a combination of an aromatic epoxy resin and an alicyclic amine curing agent, or a combination of an alicyclic epoxy resin and an aromatic amine curing agent. By using these combinations, heat resistance of the resulting porous epoxy resin sheet becomes higher and thus such a sheet is preferably used as a porous support for the composite reverse osmosis membranes.

The kinds and blending ratios of an epoxy resin and a curing agent are preferably determined such that the proportion of aromatic ring-derived carbon atoms to all the carbon atoms constituting a porous epoxy resin sheet is in the range of 0.1 to 0.65. When the above value is less than 0.1, the recognition properties of the plane structure of the separation medium, which is the characteristic of the porous epoxy resin sheet, tend to be decreased. On the other hand, when the above value exceeds 0.65, it becomes difficult to form a uniform three-dimensional structure.

In addition, the blending ratio of a curing agent to an epoxy resin is preferably 0.6 to 1.5 equivalents of the curing agent per one equivalent of an epoxy group. If the curing agent equivalent is less than 0.6, the cross-linking density of the cured product becomes decreased, and heat resistance as well as solvent resistance tends to decrease. On the other hand, if the curing agent equivalent exceeds 1.5, unreacted curing agent tends to remain or to inhibit the enhancement of the cross-linking density. In the present invention, a curing accelerator other than the above-mentioned curing agents may be added to obtain the desired porous structure. The curing accelerators that can be used are well-known substances, including, for example, tertiary amines such as triethylamine and tributylamine, and imidazoles such as 2-phenol-4-methylimidazole, 2-ethyl-4-methylimidazole and 2-phenol-4,5-dihydroxyimidazole.

The porogen is a solvent capable of dissolving an epoxy resin and a curing agent as well as capable of causing reaction-induced phase separation after polymerization between the epoxy resin and the curing agent, and examples thereof include cellosolves (e.g. methyl cellosolve, ethyl cellosolve), esters (e.g. ethylene glycol monomethyl ether acetate, propylene glycol monomethyl ether acetate), and glycols (e.g. polyethylene glycol, polypropylene glycol). These solvents may be used alone or in combination of two or more thereof.

Of these, in order to form a uniform three-dimensional structure and uniform pores, it is preferable to use methyl cellosolve, ethyl cellosolve, polyethylene glycol with a molecular weight of 600 or less, ethylene glycol monomethyl ether acetate, propylene glycol monomethyl ether acetate, polypropylene glycol, polyoxyethylene monomethyl ether, and polyoxyethylene dimethyl ether, and it is particularly preferable to use polyethylene glycol with a molecular weight of 200 or less, polypropylene glycol with a molecular weight of 500 or less, polyoxyethylene monomethyl ether and propylene glycol monomethyl ether acetate. These solvents may be used alone or in combination of two or more thereof.

Any solvent that can dissolve the reaction product between the epoxy resin and the curing agent may be used as a porogen even if it is insoluble or hardly soluble in individual epoxy resins or curing agents at normal temperature. Such a porogen includes, for example, brominated bisphenol A type epoxy resins ("EPICOAT 5058" manufactured by Japan Epoxy Resin Co., Ltd.).

The viscosity (initial viscosity) at a normal temperature (about 15°C to 30°C) just before the start of curing the resin mixture in the present invention is required to be maintained at 1000 mPa·s or more. In order to adjust the viscosity within this range, such adjustment may be set by curing with stirring or by adjusting the kind and combination of the epoxy resins. For example, if the viscosity is 1000 mPa·s or less, a method of increasing the proportion of a solid type epoxy resin at normal temperature is used for such a purpose. Furthermore, the initial viscosity of the resin mixture is preferably 5000 mPa·s or less, more preferably 3000 mPa·s or less. Thus, if the viscosity is too low, a sufficient effect cannot be obtained in the present invention, and if the viscosity is too high, it becomes difficult to obtain the desired pore size. In this viscometry, a resin mixture may be sampled and the viscosity may be measured with a commercially available low viscosity viscometer of rotary, vibratory, or capillary type, and it is especially preferable to use a viscometer of E-type or SV-type.

In order to use the porous epoxy resin sheet as a support for composite separation membranes, it is necessary to adjust an average pore diameter of the porous epoxy resin sheet obtained by a mercury intrusion method to 0.01 to 0.4 µm. The average pore diameter of the porous epoxy resin sheet can be adjusted to the desired range by appropriately setting various conditions, such as whole epoxy equivalent weight, proportion of porogen, curing temperature, etc. If the average pore diameter is too large, it is difficult to form a uniform separation function layer on the porous epoxy resin sheet, and if the average pore diameter is too small, the performance of the composite separation membrane tends to be impaired. In order to adjust the average pore diameter within the above range, it is preferable to use a porogen in an amount of 40 to 80% by weight based on the total weight of the epoxy resin, curing agent, and porogen, and when the amount of porogen is less than 40% by weight, the average pore diameter tends to become too small and pores may not be formed. On the other hand, if the amount of the porogen exceeds 80% by weight, the average pore diameter becomes too large to form a uniform separation function layer on the porous sheet in the production of a composite reverse osmosis membrane, or the salt-blocking property tends to remarkably decrease. In order to further enhance these properties, the average pore diameter is more preferably 0.04 to 0.2 µm, and for that purpose, porogen is preferably used in an amount of 60 to 70% by weight.

Moreover, as a method of adjusting the average pore diameter of the porous epoxy resin sheet to 0.01 to 0.4 µm, it is also suitable to mix two or more epoxy resins each having a different epoxy equivalent and to use them. In that case, the difference in epoxy equivalent weights is 100 or more, and it is preferable to mix an epoxy resin that is liquid at normal temperature with an epoxy resin that is solid at normal temperature and then use the mixture.

A cylindrical or columnar cured resin body can be produced by filling the resin mixture in, for example, a cylindrical or columnar mold (container for die-cutting) and then allowing the mixture to stand at an ambient temperature of 45°C or less for 1 to 48 hours so that a curing reaction is performed. If the temperature of the mixture at the start of curing is too low, a long time is required for the curing and thus such a temperature is preferably 15°C or more. At this time, the mixture may be stirred as needed for the purpose of making the contents uniform. In this case, it has been found that a more uniform cured body can be obtained when stirring is carried out in a semi-cured state of a viscosity of 1500 mPa·s to 4000 mPa·s at 30°C to 40°C of the mixture temperature. Furthermore, after allowing the cured body to stand at 45°C or less, post-cure (post-treatment) may be performed from the time when the viscosity exceeds 10, 000 mPa·s, in order to increase the degree of crosslinking in the crosslinked epoxy resin body.

The post-cure conditions are not particularly limited, but the temperature is about room temperature or 50 to 160°C, and the time is about 2 to 48 hours. Particularly, in the present invention, heat curing is carried out preferably at 60°C or more, and a method where the temperature is sequentially raised in multiple stages is preferably used as such a heat curing to obtain a uniform cured body.

As a method of stirring the resin mixture or the semi-cured product, there may be used a conventionally known method depending on the capacity and viscosity of the contents, and the shape of a stirrer, stirring speed, time, power, etc. may be appropriately set. It is preferable to perform the stirring of the present invention with use of a three-one motor at a rotating speed of about 200 to 1000 rpm for about 5 minutes to 1 hour depending on the state of the resin mixture.

As the cylindrical or columnar mold (container for die-cutting), there are exemplified metals, glass, ceramics, hardened clay, hardened plastics, or a combination thereof, and a suitable mold that is not affected by the resin mixture and does not cause deformation by the temperature change and may be used according to the purposes. In the present invention, it is desirable to use a mold obtained by applying a silicon-based release agent to a mold of metal that is hard to occur corrosion, such as aluminum and stainless steel, followed by drying.

The size of the cylindrical or columnar cured resin body is not particularly limited, but the thickness of from the center axis of the cylindrical cured resin body is preferably 5 cm or more, more preferably 10 cm or more, in view of production efficiency of the resin sheet. In addition, the diameter of the cylindrical or columnar cured resin body is also not particularly limited, but the diameter is preferably 30 cm or more from the viewpoint of production efficiency of the resin sheet, and is more preferably 40 to 150 cm in order to perform a uniform curing. Further the width (axial length) of the cured body can be appropriately set in consideration of the size of the intended resin sheet, but such a width is usually 20 to 200 cm, preferably 30 to 150 cm, and more preferably 50 to 120 cm, in view of easy handling.

For the capacity of the resin mixture and the cylindrical or columnar cured resin body, there is a tendency of making it difficult to obtain a uniform cured resin body as the capacity becomes larger. Therefore, the effect of the present invention is remarkable in the production by using a capacity of one liter or more, and the effect of the present invention is more remarkable when using a capacity of 40 liters or more. In particular, the capacity of 70 liters or more is particularly effective. Further, in the case of making a cylindrical cured resin body, a columnar cured resin body is made using a columnar mold, and then the central portion may be punched to make a cylindrical cured resin body.

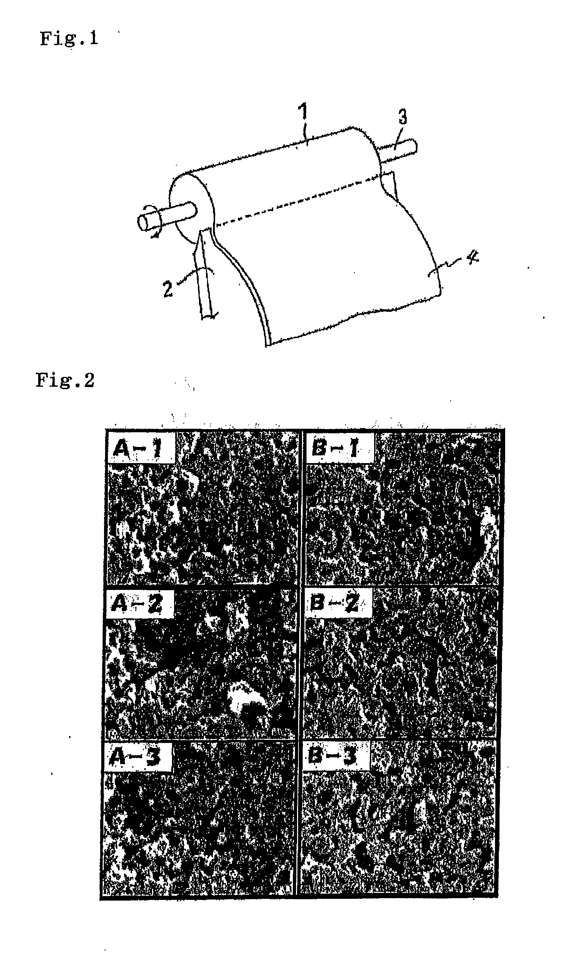

A long epoxy resin sheet is produced by cutting the surface of the cylindrical or columnar cured resin body at a certain thickness while rotating the cured resin body around the cylindrical or columnar axis. Fig. 1 is a schematic view illustrating the process of cutting a cylindrical cured resin body 1 by using a slicer 2. The line speed at the time of cutting is, for example, about 2 to 50 m/min.

The thickness of the epoxy resin sheet 4 after cutting is not particularly limited, but it is about 20 to 1000 µm from the viewpoint of strength and ease of handling, and, further, it is preferably 50 to 500 µm, more preferably 100 to 200 µm, for the purpose of using as a separation membrane.

Thereafter, a porous epoxy resin sheet having pores connected with each other is produced by removing the porogen contained in the epoxy resin sheet. Examples of a solvent used for removing the porogen from the epoxy resin sheet include water, DMF (N,N-dimethylformamide), DMSO (dimethyl sulfoxide), THF (tetrahydrofuran) and mixtures thereof, and these solvents are appropriately selected depending on the kind of the porogen used. Moreover, supercritical fluids such as water and carbon dioxide can also be preferably used.

After removing the porogen, the porous epoxy resin sheet may be subjected to a drying treatment, etc. The drying conditions are not particularly limited, but the temperature is usually about 40 to 120°C, preferably about 50 to 80°C, and the drying time is about 3 minutes to 3 hours.

It is preferable to select the optimal conditions after drawing a phase diagram of the system in order to obtain the desired porosity, average pore diameter and pore diameter distribution because the porosity, average pore diameter and pore diameter distribution of the epoxy resin porous sheet vary depending on the kind and mixing ratio of raw materials (e.g. epoxy resins, curing agents, porogens) to be used as well as on the reaction conditions such as heating temperature and heating time in the reaction-induced phase separation. In addition, by controlling the molecular weight and molecular weight distribution of the cross-linked epoxy resin, viscosity of the system, and the speed of the cross-linking reaction at the time of phase separation, a stable porous structure can be obtained after fixation of a bicontinuous structure between the cross-linked epoxy resin and the porogen to a specific state. In addition, the porosity of the porous epoxy resin sheet is preferably 20 to 80% and more preferably 30 to 60%.

In the case where a composite separation membrane is produced by forming a separation function layer on the surface of the porous epoxy resin sheet, an atmospheric pressure plasma treatment or alcohol treatment may be applied to the surface side where a separation function layer of the porous epoxy resin sheet is formed, before forming the separation function layer. By applying the treatment, thereby to modify the surface (for example, enhancement of the hydrophilicity and increase of the surface coarseness), a composite separation membrane can be produced, wherein the adhesion of the porous epoxy resin sheet and the separation function layer is enhanced and the floating of the separation function layer (a phenomenon wherein the separation function layer swells like a hemisphere as a result of the fact that water penetrates between the porous epoxy resin sheet and the separation function layer) is hardly caused.

It is preferable to perform the atmospheric pressure plasma treatment under an atmosphere in the presence of a nitrogen gas, an ammonia gas, or a noble gas (such as helium or argon) at a discharge strength of about 0.1 to 5 Wsec/cm². In addition, it is preferable to perform the alcohol treatment by application of an aqueous solution containing 0.1 to 90% by weight of a monovalent alcohol such as methyl alcohol, ethyl alcohol, n-propyl alcohol, isopropyl alcohol, or t-butyl alcohol, or immersion in the aqueous solution.

The thickness of the porous epoxy resin sheet is not particularly limited, but it is preferably about 20 to 1000 µm in view of the strength, and when the sheet is used as a porous support for a composite reverse osmosis membrane, the thickness is preferably 50 to 250 µm, and more preferably 80 to 150 µm, from the viewpoint of practical water permeability and salt blocking property. In addition, the back side of the porous epoxy resin sheet may be reinforced with a woven fabric or a nonwoven fabric.

When the porous epoxy resin sheet is used as a porous support for a composite reverse osmosis membrane, the average pore diameter as estimated by the mercury porosimetry method is preferably 0.01 to 0.4 µm, and more preferably 0.05 to 0.2 µm. If the average pore diameter is too large, it is difficult to form a uniform separation function layer, and if the average pore diameter is too small, the performance of the composite reverse osmosis membrane tends to be impaired. In addition, the porosity is preferably 20 to 80% and more preferably 30 to 60%. The thickness is usually about 25 to 125 µm, and preferably about 40 to 75 µm.

Hereinafter, described is a method for producing a composite reverse osmosis membrane wherein a separation function layer is formed on the surface of the above-mentioned porous resin sheet.

The production of the composite separation membrane is preferably performed by forming on the porous support an aqueous coating layer containing a polyfunctional amine component and bringing a solution containing a polyfunctional acid halide component into contact with the coating layer, thereby to form the polyamide-based separation function layer.

The polyfunctional amine component is not particularly limited as long as it is a polyfunctional amine, and such a polyfunctional amine includes an aromatic polyfunctional amine, an aliphatic polyfunctional amine, and an alicyclic polyfunctional amine. The polyfunctional amine component may be used alone or as a mixture thereof.

The aromatic polyfunctional amines include, for example, m-phenylenediamine, p-phenylenediamine, 1,3,5-triamino benzene, 1,2,4-triamino benzene, 3,5-diaminobenzoic acid, 2,4-diaminotoluene, 2,6-diaminotoluene, 2,4-diaminoanisole, amidol, xylylene diamine etc.

The aliphatic polyfunctional amines include, for example, ethylenediamine, propylenediamine, tris(2-aminoethyl)amine, etc.

The alicyclic polyfunctional amines include, for example, 1,3-diaminocyclohexane, 1,2-diaminocyclohexane, 1,4-diaminocyclohexane, piperazine, 2,5-dimethylpiperazine, 4-aminomethyl piperazine, etc.

In order to facilitate film formation or improve the performance of the composite reverse osmosis membrane obtained, for example, a polymer (e.g. polyvinyl alcohol, polyvinyl pyrrolidone, polyacrylic acid, etc.) or a polyvalent alcohol (e.g. sorbitol, glycerol, etc.) may also be incorporated into water in the aqueous solution containing the polyfunctional amine component.

The polyfunctional acid halide component is not particularly limited, and an aromatic polyfunctional acid halide component, an aliphatic polyfunctional acid halide component, or an alicyclic polyfunctional acid halide component can be used. The polyfunctional acid halide component may be used alone or as a mixture thereof.

The aromatic polyfunctional acid halides include, for example trimesic acid chloride, terephthalic acid chloride, isophthalic acid chloride, biphenyl dicarboxylic acid chloride, naphthalene dicarboxylic acid dichloride, benzenetrisulfonic acid chloride, benzenedisulfonic acid chloride, chlorosulfonyl benzenedicarboxylic acid chloride etc.

The aliphatic polyfunctional acid halides include, for example, propanetricarboxylic acid chloride, butane tricarboxylic acid chloride, pentanetricarboxylic acid chloride, glutaryl halide, adipoyl halide etc.

The alicyclic polyfunctional acid halides include, for example, cyclopropane tricarboxylic acid chloride, cyclobutanetetracarboxylic acid chloride, cyclopentane tricarboxylic acid chloride, cyclopentanetetracarboxylic acid chloride, cyclohexanetricarboxylic acid chloride, tetrahydrofurantetracarboxylic acid chloride, cyclopentanedicarboxylic acid chloride, cyclobutanedicarboxylic acid chloride, cyclohexanedicarboxylic acid chloride, tetrahydrofuran dicarboxylic acid chloride, etc.

The concentration of the polyfunctional acid halide component and the polyfunctional amine component which are contained in the solution and the aqueous solution, respectively, is not particularly limited, but the polyfunctional acid halide component is usually 0.01 to 5% by weight, preferably 0.05 to 1% by weight, and the polyfunctional amine component is usually 0.1 to 10% by weight, preferably 0.5 to 5% by weight.

In the production of the composite separation membrane, such as in the production of a polyamide-based composite separation membrane described above, an additive may be added to a solution containing a polyfunctional acid halide component. The additive is not limited as long as it is a substance that does not dissolve in a solution containing an acid halide component and enhances the compatibility with an aqueous solution containing a polyfunctional amine component, and there can be exemplified by ethers, ketones, esters, nitro compounds, halogenated alkenes, halogenated aromatic compounds, aromatic hydrocarbons, non-aromatic unsaturated hydrocarbons, and heteroaryl compounds.

The separation functional layer is formed by coating on the porous support an aqueous solution containing the polyfunctional amine component and removing the excess aqueous solution, thereby to form an aqueous coating layer. Then, a solution containing the polyfunctional acid halide component is brought into contact with the coating layer. The contact time is usually 10 seconds to 5 minutes, preferably 30 seconds to 1 minute. After removing the excess solution, polycondensation is carried out at the interface generated by contact. In addition, the product is dried in the air (20°C to 30°C) for about 1 to 10 minutes, preferably for about 2 to 8 minutes, so that a polyamide separation function layer containing a crosslinked polyamide is formed on a porous support. After drying the function layer, the membrane surface was washed with deionized water.

Further, the composite separation membrane of the present invention is usually processed into the form of a separation membrane element and used as being loaded in a pressure vessel. For example, a spiral-type membrane element includes a laminated body in which a composite separation membrane, a feed-side flow passageway member and a permeation-side flow passageway member are in the form of a laminate that is spirally wound around a central tube (water-collecting tube), the membrane element being fixed with end members and a sheathing material.

Hereinafter, the present invention will be described in more detail by way of Examples and Comparative Examples. The present invention is not intended to be limited to these Examples.

### EXAMPLES

### (Example 1)

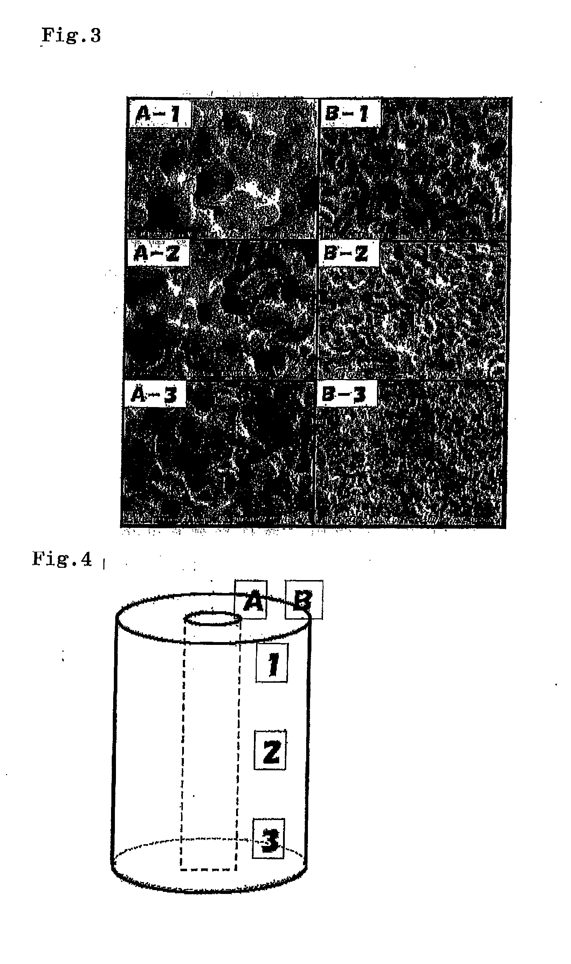

Bisphenol A type epoxy resin having an epoxy equivalent weight of 184 to 194 (jER828, manufactured by Japan Epoxy Resins Co., Ltd.) 1398 g, bisphenol A type epoxy resin having an epoxy equivalent weight of 3000 to 5000 (jER1010, Japan Epoxy Resins Co., Ltd.) 932 g, and bis(4-aminocyclohexyl)methane 520 g as a curing agent and polyethylene glycol (PEG200, manufactured by Sanyo Chemical Industries, Ltd.) 5200 g were stirred at 400 rpm for 15 minutes using a three-one motor, thereby to give a resin mixture. The viscosity at this time was 1800 mPa·s (as measured with a tuning fork vibration viscometer: SV-10H) (A toal of products of the epoxy equivalent weight (central value) and the mixing ratio of the epoxy resin is 190 x 60 [%] + 4000 x 40 [%] = 171,400). After applying a release agent (QZ-13, manufactured by Nagase ChemteX Corporation) thinly to the inside of an 8-liter stainless steel cylindrical container, this was dried at 100°C. The resin mixture was placed in the container and allowed to stand while keeping the mixture at a temperature of 20°C to 40°C under an atmospheric temperature of 25°C for 24 hours. Then, second curing was performed by heating the container to 70°C for 4 hours and further to 130°C for 17 hours to give a cured epoxy resin body. This cured body was cut to a thickness of about 130 µm by a cutting lathe apparatus (manufactured by Toshiba Machine Co., Ltd.) to give a sheet. The sheet was then immersed in pure water for 12 hours so as to remove the polyethylene glycol, thereby to obtain a porous epoxy resin sheet. Further, this porous epoxy resin sheet was dried in a dryer of 50°C for about 4 hours to obtain a porous epoxy resin sheet having an average pore diameter of 0.06 µm. For the sheet, SEM photographs with a magnification of 20,000 were taken in each region as shown in Figure 4 and it was found that an epoxy resin sheet having a uniform pore diameter as shown in Fig. 2 had been obtained.

SEM photographs of Figs. 2 and 3 will be described. For the cured cylindrical epoxy resin body as shown in Fig. 4, when a sheet sample immediately after the start of cutting was regarded as B and a sheet sample just before the end of cutting was regarded as A, SEM photographs of three points 1 to 3 (center portion and both ends) were taken to visually confirm the pore size distribution.

### (Comparative Example 1)

A porous epoxy resin sheet was prepared in the same manner as in Example 1, except that bisphenol A type epoxy resin having an epoxy equivalent weight of 184 to 194 (jER828, manufactured by Japan Epoxy Resins Co., Ltd.) 1165 g and bisphenol A type epoxy resin having an epoxy equivalent weight of 450 to 500 (jER1001, Japan Epoxy Resins Co., Ltd.) 1165 g (A total of products of the epoxy equivalent weight (central value) and the mixing ratio of the epoxy resin is 190 x 50 [%] + 475 x 50 [%] = 33,250), curing at 45°C or less was not performed, and curing was carried out under heating at 130°C for 24 hours. The pore diameter of the porous epoxy resin sheet varied greatly in each region as shown in Fig. 3, and a uniform porous epoxy resin sheet could not be obtained.

### (Comparative Example 2)

Using the same resin mixture as in Example 1, a porous epoxy resin sheet was prepared in the same manner as in Example 1 except that curing at 45°C or less was not performed and curing was performed under heating at 130°C for 24 hours. However, connected pores were not formed and a sheet in a porous state could not be formed.

### DESCRIPTION OF REFERENCE SIGNS

- 1:: Cylindrical cured resin body
- 2:: Slicer
- 3:: Rotation axis
- 4:: Resin sheet

## Claims

1. A method for producing a porous epoxy resin sheet, comprising forming a cylindrical or columnar cured resin body from a resin mixture containing an epoxy resin, a curing agent, and a porogen, cutting the surface of the cured resin body at a predetermined thickness to make an epoxy resin sheet, and then removing the porogen from the sheet to render the sheet porous, wherein when the cured resin body is formed from the resin mixture, curing is performed in a state where the viscosity of the mixture is at least 1,000 mPa·s.

2. The method for producing a porous epoxy resin sheet according to claim 1, wherein the cutting thickness of the epoxy resin sheet is 20 µm to 1000 µm.

3. The method for producing a porous epoxy resin sheet according to claim 1 or 2, wherein the temperature when the cured resin body is formed from the resin mixture is 15°C or more.

4. The method for producing a porous epoxy resin sheet according to any one of claims 1 to 3, wherein the initial viscosity of the resin mixture is 5000 mPa·s or less.

5. The method for producing a porous epoxy resin sheet according to any one of claims 1 to 4, wherein the capacity of the resin mixture and the cured resin body is 1 liter or more.

6. The method for producing a porous epoxy resin sheet according to any one of claims 1 to 5, wherein the epoxy resin is a bisphenol A type epoxy resin.

7. The method for producing a porous epoxy resin sheet according to any one of claims 1 to 6, wherein when using two or more kinds of epoxy resins having different epoxy equivalent weights as the epoxy resin, a total of products of the epoxy equivalent weight and the mixing ratio in the epoxy resin is 70,000 or more.

8. The method for producing a porous epoxy resin sheet according to any one of claims 1 to 7, wherein the resin mixture is cured at 45°C or less and then cured under heating at 70°C or more.

9. A porous epoxy resin sheet obtained by the method according to any one of claims 1 to 8.

10. A composite separation membrane comprising the porous epoxy resin sheet according to claim 9.

11. A composite separation membrane element using the composite separation membrane according to claim 10.
